# NEUE EUROPÄISCHE PATENTSCHRIFT

(11) **EP 1 949 011 B2**
(45) Veröffentlichungstag und Bekanntmachung des Hinweises auf die Entscheidung über den Einspruch: **11.05.2016**
(45) Hinweis auf die Patenterteilung: 10.02.2010
(21) Anmeldenummer: 06819388.7
(22) Anmeldetag: 10.11.2006
(51) Int. Cl.: F26B 1/00, C08J 3/00, C08J 3/12, B29B 13/06, B01J 20/30, B01J 20/26, C08F 6/00

(54) **VERFAHREN ZUR HERSTELLUNG WASSERABSORBIERENDER POLYMERPARTIKEL**
PROCESS FOR PREPARING WATER-ABSORBING POLYMER PARTICLES
PROCEDE DE FABRICATION D'UNE PARTICULE DE POLYMERE ABSORBANT L EAU

(30) Priorität: 16.11.2005 DE 102005055077
(43) Veröffentlichungstag der Anmeldung: 30.07.2008
(73) Patentinhaber: BASF SE, 67056 Ludwigshafen am Rhein (DE)
(72) Erfinder: NITSCHKE, Meinhard, 76887 Bad Bergzabern (DE)
(74) Vertreter: BASF IP Association
(86) Internationale Anmeldenummer: PCT/EP2006/068330
(87) Internationale Veröffentlichungsnummer: WO 2007/057350

(56) Entgegenhaltungen:
- EP-A1- 1 367 081
- EP-A2- 0 948 997
- EP-A2- 1 130 045
- EP-B1- 0 926 162
- WO-A1-00/24810
- WO-A1-93/05080
- WO-A1-94/20547
- WO-A1-95/05856
- DE-A1- 19 849 499
- DE-T2- 68 922 282
- DE-T2- 69 926 164

## Beschreibung

Die vorliegende Erfindung betrifft ein Verfahren zur Herstellung wasserabsorbierender Polymerpartikel, wobei unvollständig getrocknete Polymerpartikel abgetrennt und vor der Nachtrocknung zerkleinert werden.

Wasserabsorbierende Polymere sind insbesondere Polymere aus (co)polymerisierten hydrophilen Monomeren, Pfropf(co)potymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Herstellung der wasserabsorbierenden Polymere wird beispielsweise in der Monographie "Modern Superabsorbent Polymer Technology°, F.L. Buchholz und A.T. Graham, Wiley-VCH, 1998, oder in Ullmann's Encyclopedia of Industrial Chemistry, 6. Auflage, Band 35, Seiten 73 bis 103, beschrieben.

Wasserabsorbierende Harze haben typischerweise eine Zentrifugenretentionskapazität von 15 bis 60 g/g, vorzugsweise von mindestens 20 g/g, bevorzugt von mindestens 25 g/g, besonders bevorzugt von mindestens 30 g/g, ganz besonders bevorzugt von mindestens 35 g/g. Die Zentrifugenretentionskapazität (CRC) wird gemäß der von der EDANA (European Disposables and Nonwovens Association) empfohlenen Testmethode Nr. 441.2-02 "Centrifuge retention capacity° bestimmt.

Zur Verbesserung der Anwendungseigenschaften, wie beispielsweise Flüssigkeitsleitfähigkeit (SFC) in der Windel und Absorption unter Druck (AUL), werden wasserabsorbierende Polymerpartikel im allgemeinen nachvemetzt Diese Nachvernetzung kann in wässriger Gelphase durchgeführt werden. Vorzugsweise werden aber gemahlene und abgesiebte Polymerpartikel (Grundpolymer) an der Oberfläche mit einem Nachvemetzer beschichtet, getrocknet und thermisch nachvernetzt. Dazu geeignete Vernetzer sind Verbindungen, die mindestens zwei Gruppen enthalten, die mit den Carboxylatgruppen des hydrophilen Polymeren kovalente Bindungen bilden können oder die mindestens zwei Carboxylgruppen oder andere funktionelle Gruppen mindestens zweier verschiedener Polymerketten des Grundpolymers miteinander vernetzen können.

Die durch Polymerisation hergestellten Hydrogele werden dabei vorzugsweise auf Bandtrocknern getrocknet Dabei wird die Gelschicht infolge von Inhomogenitäten oft ungleichmäßig getrocknet, so dass entweder Teile des Hydrogels übertrocknet werden müssen, worunter die Produktqualität leidet, oder Teile des Hydrogels nur unvollständig getrocknet werden. Unvollständig getrocknete Polymerpartikel führen zu Problemen in den weiteren Prozeßschritten und müssen abgetrennt werden.

Verfahren unvollständig getrocknete Polymerpartikel bei der Trocknung zu vermeiden sind beispielsweise aus JP-A-06-73518, JP-A-06-107800, EP-A-0 497 623, EP-A-0 508 810 und EP-A-0 574 248 bekannt.

JP-A-06-73518 beschreibt ein Verfahren zur Trocknung von Hydrogelen auf einem Bandtrockner, bei dem die Trocknerleistung kontinuierlich an die aktuelle Schichtdicke der Geischicht angepasst wird, wodurch der Anteil unvollständig getrockneter Polymerpartikel vermindert wird.

JP-A-06-107800 lehrt, dass die übertrocknung und das Abtrennen unvollständig getrockneter Polymerpartikel vermieden werden kann, wenn bereits vor der Trocknung übergroße Brocken entfernt werden.

EP-A-0 497 623 offenbart ein Verfahren, bei dem das Hydrogel vor der Trocknung extrudiert wird.

EP-A-0 508 810 und EP-A-0 574 248 lehren die Verwendung eines speziellen Kneters als Polymerisationsreaktor, wodurch größere Hydrogelpartikel vor der Trocknung vermieden werden.

Die Abtrennung unvollständig getrockneter Polymerpartikel wird beispielsweise in EP-0 948 997 beschrieben.

EP-A-0 948 997 offenbart ein Verfahren zur kontinuierlichen Herstellung wasserabsorbierender Polymere, wobei unvollständig getrocknete Polymerpartikel abgetrennt und gegebenenfalls in die Trocknung zurückgeführt wird.

Die Aufgabe der vorliegenden Erfindung war die Bereitstellung eines verbesserten Verfahrens zur kontinuierlichen Herstellung wasserabsorbierender Polymerpartikel.

Eine weitere Aufgabe der vorliegenden Erfindung war die Bereitstellung eines Verfahrens zur kontinuierlichen Herstellung wasserabsorbierender Polymerpartikel, das geeignet ist die Kapazität bestehender Produktionsanlagen zu erhöhen, insbesondere ohne Vergrößerung bestehender Anlagenteile.

Gelöst wurde die Aufgabe durch ein Verfahren zur Herstellung wasserabsorbierender Polymerpartikel, umfassend die Schritte
i) Trocknung eines Hydrogels zur Herstellung eines getrockneten Hydrogels,
ii) Abtrennung unvollständig getrockneter Polymerpartikel aus dem getrockneten Hydrogel und
iii) Trocknung der abgetrennten unvollständig getrockneten Polymerpartikel,
dadurch gekennzeichnet, dass die abgetrennten unvollständig getrockneten Polymerpartikel vor der Trocknung iii) zerkleinert werden, die zerkleinerten unvollständig getrockneten Polymerpartikel vor der Trocknung iii) klassiert werden und nur das Grobkorn in der Trocknung iii) überführt wird.

Es werden vorzugsweise Bandtrockner, besonders bevorzugt Umluftbandtrockner, für die Trocknung i) eingesetzt.

In einer bevorzugten Ausführungsform wird für Trocknung i) und Trocknung iii) derselbe Trockner verwendet.

Üblicherweise beträgt der Wassergehalt des Hydrogels nach der Trocknung i) von 1 bis 20 Gew.-%, vorzugsweise weniger als 10 Gew.-%, besonders bevorzugt weniger als 5 Gew.-%, wobei es sich infolge der möglichen inhomogenitäten nur um mittlere Wassergehalte handelt.

Die abgetrennten unvollständig getrockneten Polymerpartikel haben üblicherweise einen Partikeldurchmesser von mindestens 5 mm, vorzugsweise mindestens 10 mm, und werden üblicherweise mittels eines Siebes mit geeigneter Maschenweite abgetrennt. Die Menge der abgetrennten unvollständig getrockneten Polymerpartikel, bezogen auf das getrocknete Hydrogel, beträgt üblicherweise weniger als 50 Gew.-%, vorzugsweise weniger als 35 Gew.-%, besonders bevorzugt weniger als 25 Gew.-%.

Die abgetrennten unvollständig getrockneten Polymerpartikelweisen einen höheren Wassergehalt auf als das getrocknete Hydrogel. Üblicherweise beträgt der Wassergehalt der abgetrennten unvollständig getrockneten Polymerpartikel von 10 bis 30 Gew.-%, wobei der Wassergehalt üblicherweise mit dem Partikeldurchmesser steigt.

Die zur Trocknung der abgetrennten unvollständig getrockneten Polymerpartikel einsetzbaren Trockner unterliegen keiner Beschränkung.

In einer bevorzugten Ausführungsform der vorliegenden Erfindung werden die abgetrennten unvollständig getrockneten Polymerpartikel mittels einer Walzenmühle zerkleinert.

Die Walzenmühlen weisen eine Spaltbreite von vorzugsweise weniger als 10 mm, besonders bevorzugt von weniger als 8 mm, ganz besonders bevorzugt von weniger als 6 mm, auf. Die Spaltbreite der einsetzbaren Walzenmühlen beträgt vorzugsweise mindestens 1 mm, besonders bevorzugt mindestens 1,5 mm, ganz besonders bevorzugt mindestens 2 mm.

Durch die Verwendung der Walzenmühle in diesem Verfahrensschritt wird die Bildung von Staub, d.h. von kleinen Polymerpartikeln, beispielsweise mit einem Partikeldurchmesser von weniger als 10 µm, vermieden.

Die zerkleinerten unvollständig getrockneten Polymerartikel werden klassiert, wobei eine siebfraktion mit größeren Partikeln als Grobkorn erhalten wird. Hierzu sind Taumelsiebmaschinen besonders geeignet.

Das Grobkorn hat üblicherweise einen Partikeldurchmesser von mindestens 5 mm, vorzugsweise mindestens 10 mm, und wird üblicherweise mittels eines Siebes mit geeigneter Maschenweite abgetrennt. Die Menge an Grobkorn, bezogen auf die zerkleinerten unvollständig getrockneten Polymerpartikel, beträgt üblicherweise weniger als 70 Gew.-%, vorzugsweise weniger als 50 Gew.-%, besonders bevorzugt weniger als 40 Gew.-%.

Durch die erfindungsgemäße Zerkleinerung und Klassierung ist es möglich Siebfraktionen mit deutlich unterschiedlichem Wassergehalt zu erhalten. Die Siebfraktion mit den kleineren Partikeln und dem niedrigeren Wassergehalt kann ohne weitere Trocknung in das Verfahren zurückgeführt werden, vorzugsweise in die Abtrennung ii).

Das Grobkorn kann direkt in die Trocknung iii) Oberführt werden.

Es ist aber vorteilhaft das Grobkorn vorher zu zerkleinern, wobei ein zerkleinertes Grobkorn erhalten wird.

Besonders bevorzugt wird das Grobkorn mittels einer Mühle mit scharfen Schlägeen oder Messeen sowie einem Sieb als Mahlraumbegrenzung zerkleinert. Die Maschenweite des Siebes beträgt vorzugsweise höchstens 35 mm, besonders bevorzugt höchstens 30 mm, ganz besonders bevorzugt höchstens 25 mm. Das zerkleinerte Grobkorn kann getrocknet werden, vorzugsweise in der Trocknung i).

Vorzugsweise wird das zerkleinerte Grobkorn klassiert, wobei Siebfraktionen mit unterschiedlichem Wassergehalt erhalten werden. Hierzu sind Taumelsiebmaschinen besonders geeignet.

Besonders bevorzugt wird das zerkleinerte Grobkorn in zwei Siebfraktionen aufgeteilt, wobei kleine Partikel, das Unterkorn, vorzugsweise ohne weitere Trocknung in das Verfahren zurückgeführt wird, vorzugsweise in die Abtrennung ii) und nur große Partikel, das Überkorn, in die Trocknung iii) überführt wird.

Ganz besonders bevorzugt wird das zerkleinerte Grobkorn in drei Siebfraktionen aufgeteilt, wobei große Partikel, das Überkorn, vorzugsweise in die Zerkleinerung des Grobkorns zurückgeführt wird, das Mittelkom in die Trocknung iii) überführt wird und kleine Partikel, das Unterkorn, vorzugsweise ohne weitere Trocknung in das Verfahren zurückgeführt wird.

Der Partikeldurchmesser des Überkoms beträgt vorzugsweise mindestens 10 mm, besonders bevorzugt mindestens 20 mm, ganz besonders bevorzugt mindestens 30 mm.

Der Partikeldurchmesser des Unterkoms beträgt vorzugsweise weniger als 5 mm, besonders bevorzugt weniger als 3 mm, ganz besonders bevorzugt weniger als 2 mm.

Das Mittelkom ist die Siebfraktion zwischen Überkorn und Unterkorn und wird vorzugsweise in die Trocknung i) zurückgeführt

Das Unterkorn wird vorzugsweise in die Abtrennung ii) zurückgeführt

Die Menge an Unterkorn beträgt vorzugsweise weniger als 10 Gew.-%, besonders bevorzugt weniger als 5 Gew.-%, ganz besonders bevorzugt weniger als 2 Gew.-%, jeweils bezogen auf die Gesamtmenge abgetrennter unvollständig getrockneter Polymerpartikel. Der Wassergehalt des Unterkoms beträgt üblicherweise von 5 bis 10 Gew.-%.

Trotz des relativ hohen Wassergehalts kann das Unterkorn ohne zusätzliche Trocknung zurückgeführt werden.

Die zerkleinerten unvollständig getrockneten Polymerpartikel können während der Trocknung iii) aber auch weiter zerkleinert werden.

Hierbei beträgt die während der Trocknung eingetragene mechanische Energie vorzugsweise mindestens 50 kJ, besonders bevorzugt mindestens 100 kJ, ganz besonders bevorzugt mindestens 150 kJ, jeweils bezogen pro kg zerkleinerte getrocknete Polymerpartikel. Vorzugsweise werden hierzu Schaufeltrockner eingesetzt. Die eingetragene Energie kann über die mechanische Leistungsaufnahme des Trockners ermittelt werden.

Die zerkleinerten getrockneten Polymerpartikel können in die Abtrennung ii) zurückgeführt oder vorzugsweise vorher weiter zerkleinert werden.

Zur weiteren Zerkleinerung der zerkleinerten getrockneten Polymerpartikel sind Walzenstühle besonders geeignet, vorzugsweise mit einer Spaltbreite von weniger als 2 mm, besonders bevorzugt von weniger als 1,5 mm, ganz besonders bevorzugt von weniger als 1 mm.

Die im erfindungsgemäßen Verfahren herstellbaren wasserabsorbierenden Polymerpartikel können durch Polymerisation einer Monomerlösung, enthaltend
a) mindestens ein ethylenisch ungesättigtes, säuregruppentragendes Monomer,
b) mindestens einen Vernetzer,
c) gegebenenfalls ein oder mehrere mit a) copolymerisierbare ethylenisch und/oder allylisch ungesättigte Monomere und
d) gegebenenfalls ein oder mehrere wasserlösliche Polymere, auf die die Monomere a), b) und ggf. c) zumindest teilweise aufgepfropft werden können,
   wobei das dabei erhaltene Grundpolymer getrocknet, klassiert,
e) gegebenenfalls mit mindestens einem Nachvernetzer nachbehandelt, getrocknet und thermisch nachvernetzt
wird, hergestellt werden.

Geeignete Monomere a) sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure, und Methacrylsäure. Ganz besonders bevorzugt ist Acrylsäure.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 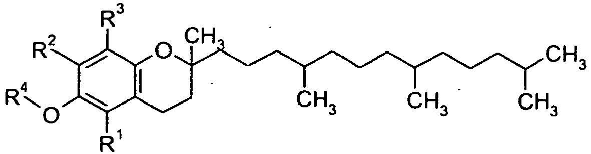 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R⁴ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere bevorzugt um 50 Gew.-ppm, Hydrochinonhalbether, jeweils bezogen auf Acrylsäure, wobei Acrylsäuresalze rechnerisch als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die wasserabsorbierenden Polymere sind vernetzt, d.h. die Polymerisation wird in Gegenwart von Verbindungen mit mindestens zwei polymerisierbaren Gruppen, die in das Polymemetzwerk radikalisch einpolymerisiert werden können, durchgeführt. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A-0 530 438 beschrieben, Diund Triacrylate, wie in EP-A-0 547 847, EP-A-0 559 4.76, EP-A-0 632 068, WO-A-93/21237, WO-A-03/104299, WO-A-03/104300, WO-A-03/104301 und in der deutschen Patentanmeldung mit dem Aktenzeichen 10331450.4 beschrieben, gemischte Acrylate, die neben Acrylatgruppen weitere ethylenisch ungesättigte Gruppen enthalten, wie in den deutschen Patentanmeldungen mit den Aktenzeichen 10331456.3 und 10355401.7 beschrieben, oder Vernetzermischungen, wie beispielsweise in DE-A-195 43 368, DE-A-196 46 484, WO-A-90/15830 und WO-A-02/32962 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandioloder Ethylenglykoldiacrylat bzw. -methacrylat sowie Trimethylolpropantriacrylat und Allylverbindungen, wie Allyl(meth) acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine wie sie beispielsweise in der älteren deutschen Anmeldung mit Aktenzeichen DE 10319462.2 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5- fach ethoxylierten und/oder propoxylierten Glyzerins. Am meisten bevorzugt sind die Triacrylate des 3- bis 5-fach ethoxylierten und/oder propoxylierten Glyzerins. Diese zeichnen sich durch besonders niedrige Restgehalte (typischerweise unter 10 Gew.-ppm) im wasserabsorbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf.

Die Menge an Vernetzer b) beträgt vorzugsweise mindestens 0,001 mol-%, besonders bevorzugt mindestens 0,01 mol-%, ganz besonders bevorzugt mindestens 0,1 mol-%, und vorzugsweise bis zu 10 mol-%, besonders bevorzugt bis zu 5 mol-%, ganz besonders bevorzugt bis zu 2 mol-%, jeweils bezogen auf das Monomer a).

Mit den Monomeren a) copolymerisierbare ethylenisch ungesättigte Monomere c) sind beispielsweise Acryl-amid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die Herstellung eines geeigneten Polymers sowie weitere geeignete hydrophile ethylenisch ungesättigte Monomere a) werden in DE-A-199 41 423, EP-A-0 686 650, WO-A-01/45758 und WO-A-03/104300 beschrieben.

Die Umsetzung wird vorzugsweise in einem Kneter, wie beispielsweise in WO-A-01/38402 beschrieben, oder auf einem Bandreaktor, wie beispielsweise in EP-A-0 955 086 beschrieben, durchgeführt.

Vorteilhaft wird das Hydrogel nach dem Verlassen des Polymerisationsreaktors noch bei höherer Temperatur, vorzugsweise mindestens 50°C, besonders bevorzugt mindestes 70°C, ganz besonders bevorzugt mindestens 80°C, sowie vorzugsweise weniger als 100°C, gelagert, beispielsweise in isolierten Behältern. Durch die Lagerung, üblicherweise 2 bis 12 Stunden, wird der Monomerumsatz weiter erhöht.

Die Säuregruppen der erhaltenen Hydrogele sind üblicherweise teilweise neutralisiert, vorzugsweise zu 25 bis 95 mol-%, bevorzugt zu 27 bis 80 mol-%, besonders bevorzugt zu 27 bis 30 mol-% oder 40 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen.

Die Neutralisation wird vorzugsweise auf der Stufe der Monomeren durchgeführt. Dies geschieht üblicherweise durch Einmischung des Neutralisationsmittels als wässrige Lösung, als Schmelze, oder bevorzugt auch als Feststoff. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Es ist aber auch möglich die Neutralisation nach der Polymerisation auf der Stufe des Hydrogels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Wird das Hydrogel zumindest teilweise nach der Polymerisation neutralisiert, so wird das Hydrogel vorzugsweise mechanisch zerkleinert, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das Hydrogel wird dann vorzugsweise mit einem Bandtrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß umso einfacher und das Produkt umso weißer, wenn der Feststoffgehalt des Gels möglichst hoch ist. Bevorzugt liegt der Feststoffgehalt des Gels vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern. Im Regelfall führt aber auch eine ausreichende Belüftung und Abführung des Wasserdampfes zu einem noch akzeptablen Produkt. Vorteilhaft hinsichtlich Farbe und Produktqualität ist in der Regel eine möglichst kurze Trocknungszeit.

Eine weitere wichtige Funktion der Trocknung des Gels ist die hier noch stattfindende Verringerung des Restmonomerengehaltes im Superabsorber. Bei der Trocknung zerfallen nämlich eventuell noch vorhandende Reste der Initiatoren und führen zu einer Einpolymerisation von noch vorhandenen Restmonomeren. Außerdem reißen die verdampfenden Wassermengen noch vorhandene freie wasserdampfflüchtige Monomere, wie beispielsweise Acrylsäure mit, und verringern so ebenfalls den Restmonomerengehalt im Superabsorber.

Das getrocknete Hydrogel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Zur Verbesserung der Anwendungseigenschaften, wie beispielsweise Flüssigkeitsleitfähigkeit (SFC) in der Windel und Absorption unter Druck (AUL), werden wasserabsorbierende Polymerpartikel im allgemeinen nachvernetzt. Diese Nachvernetzung kann in wässriger Gelphase durchgeführt werden. Vorzugsweise werden aber gemahlene und abgesiebte Polymerpartikel (Grundpolymer) an der Oberfläche mit einem Nachvernetzer beschichtet, getrocknet und thermisch nachvernetzt. Dazu geeignete Vernetzer sind Verbindungen, die mindestens zwei Gruppen enthalten, die mit den Carboxylatgruppen des hydrophilen Polymeren kovalente Bindungen bilden können oder die mindestens zwei Carboxylgruppen oder andere funktionelle Gruppen mindestens zweier verschiedener Polymerketten des Grundpolymers miteinander vernetzen können.

Hierzu geeignete Nachvernetzer sind Verbindungen, die mindestens zwei Gruppen enthalten, die mit den Carboxylatgruppen der Polymere kovalente Bindungen bilden können. Geeignete Verbindungen sind beispielsweise Alkoxysilylverbindungen, Polyaziridine, Polyamine, Polyamidoamine, Di- oder Polyglycidylverbindungen, wie in EP-A-0 083 022, EP-A-543 303 und EP-A-937 736 beschrieben, mehrwertige Alkohole, wie in DE-C-33 14 019, DE-C-35 23 617 und EP-A-450 922 beschrieben, oder β-Hydroxyalkylamide, wie in DE-A-102 04 938 und US-6,239,230 beschrieben. Geeignet sind ferner Verbindungen mit gemischter Funktionalität, wie Glycidol, 3-Ethyl-3-oxetanmethanol (Trimethylolpropanoxetan), wie in EP-A-1 199 327 beschrieben, Aminoethanol, Diethanolamin, Triethanolamin oder Verbindungen, die nach der ersten Reaktion eine weitere Funktionalität ausbilden, wie Ethylenoxid, Propylenoxid, Isobutylenoxid, Aziridin, Azetidin oder Oxetan.

Des weiteren sind in DE-A-40 20 780 zyklische Karbonate, in DE-A-198 07 502 2-Oxazolidon und dessen Derivate, wie N-(2-Hydroxyethyl)-2-oxazolidon, in DE-A-198 07 992 Bis- und Poly-2-oxazolidinone, in DE-A-198 54 573 2-Oxotetrahydro-1,3-oxazin und dessen Derivate, in DE-A-198 54 574 N-Acyl-2-oxazolidone, in DE-A-102 04 937 zyklische Harnstoffe, in der deutschen Patentanmeldung mit dem Aktenzeichen 10334584.1 bizyklische Amidacetale, in EP-A-1 199 327 Oxetane und zyklische Harnstoffe und in WO-A-03/031482 Morpholin-2,3-dion und dessen Derivate als geeignete Nachvernetzer beschrieben.

Die Nachvernetzung wird üblicherweise so durchgeführt, dass eine Lösung des Nachvernetzers auf das Hydrogel oder die trockenen Grundpolymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige®-Mischer, Bepex®-Mischer, Nauta®-Mischer, Processall®-Mischer und Schugi®-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteterTrockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 50 bis 200°C, und besonders bevorzugt bei 50 bis 150°C. Die bevorzugte Verweilzeit bei dieser Temperatur im Reaktionsmischer oder Trockner beträgt unter 30 Minuten, besonders bevorzugt unter 10 Minuten.

Gemäß dem erfindungsgemäßen Verfahren können wasserabsorbierende Polymerpartikel mit konstanterQualität hergestellt werden. Die zerkleinerten unvollständig getrockneten Polymerpartikel lassen sich effizienter trocknen. Der Anteil in die Trocknung rückgeführter unvollständig getrockneter Polymerpartikel kann zusätzlich gesenkt werden, wodurch die Trocknerkapazität weiter steigt.

### Methoden:

Die Messungen sollten, wenn nicht anders angegeben, bei einer Umgebungstemperatur von 23 é± 2 °C und einer relativen Luftfeuchte von 50 ± 10 % durchgeführt werden. Die wasserabsorbierenden Polymere werden vor der Messung gut durchmischt.

### Wassergehalt

Der Wassergehalt der wasserabsorbierenden Polymerpartikel wird gemäß der von der EDANA (European Disposables and Nonwovens Association) empfohlenen Testmethode Nr. 430.2-02 "Moisture content" bestimmt.

Die EDANA-Testmethoden sind beispielsweise erhältlich bei der European Disposables and Nonwovens Association, Avenue Eugène Plasky 157, B-1030 Brüssel, Belgien.

### Beispiele

### Beispiel 1

Eine zu 72 mol-% mit Natronlauge neutralisierten Acrylsäurelösung wurde zusammen mit Polyethylenglykoldiacrylat (Diacrylat eines Polyethylenglykols mit einem mittleren Molgewicht von 400 g/mol) in einem diskontinuierlichen Kneter polymerisiert. Das erhaltene krümelige Polymergel wurde bei 160°C in einem Umluftbandtrockner getrocknet. Das getrocknete Polymergel wurde noch im Bandtrockner mittels einer Stachelwalze grob zerkleinert.

Mittels eines Siebes mit einer Maschenweite von 10 mm wurden die unvollständig getrockneten Polymerpartikel abgetrennt. Der Anteil der abgetrennten unvollständig getrockneten Polymerpartikel mit einem Partikeldurchmesser von über 10 mm betrug 13 Gew.-%.

21,9 kg abgetrennte unvollständig getrocknete Polymerpartikel wurden mittels einer Walzenmühle mit einer Spaltbereite von weniger als 6 mm zerkleinert und mit einem Sieb mit einer Maschenweite von 10 mm gesiebt. Dabei wurden 13,3 kg Polymerpartikel mit einem Durchmesser von weniger als 10 mm und einem Wassergehalt von weniger als 1,5 Gew.-% erhalten, die ohne weitere Trocknung in das Verfahren zurückgeführt werden konnten.

8,6 kg abgetrenntes Grobkorn mit einem Partikeldurchmesser von über 10 mm wurde in einer Mühle mit scharfen Schlägern und einem Sieb mit einer Maschenweite von weniger als 25 mm als Mahlraumbegrenzung zerkleinert. Die Analyse des zerkleinerten Grobkorns ergab folgende Werte (Mehrfachbestimmung):

| Partikeldurchmesser | Menge | Wassergehalt |
|---|---|---|
| > 4 mm | 6,5 kg | 12-20 Gew.-% |
| 2 bis 4 mm | 0,4 kg | 8-10 Gew.-% |
| < 2 mm | 1,7 kg | 7-9 Gew.-% |

Das zerkleinerte Grobkorn wurde mit zwei Sieben mit einer Maschenweite von 30 mm und 2 mm gesiebt. Partikel mit einem Durchmesser von größer 30 mm wurden in die Mühle zurückgeführt, Partikel mit einem Durchmesser von 2 bis 30 mm wurden in den Bandtrockner zurückgeführt und Partikel mit einem Durchmesser von weniger als 2 mm konnten ohne weitere Trocknung in das Verfahren zurückgeführt werden.

### Beispiel 2

Eine zu 72 mol-% mit Natronlauge neutralisierten Acrylsäurelösung wurde zusammen mit Polyethylenglykoldiacrylat (Diacrylat eines Polyethylenglykols mit einem mittleren Molgewicht von 400 g/mol) in einem diskontinuierlichen Kneter polymerisiert. Das erhaltene krümelige Polymergel wurde bei 160°C in einem Umluftbandtrockner getrocknet. Das getrocknete Polymergel wurde noch im Bandtrockner mittels einer Stachelwalze grob zerkleinert.

Mittels eines Siebes mit einer Maschenweite von 10 mm wurden die unvollständig getrockneten Polymerpartikel abgetrennt. Der Anteil der abgetrennten unvollständig getrockneten Polymerpartikel mit einem Partikeldurchmesservon über 10 mm betrug 20 Gew.-%.

35,0 kg abgetrennte unvollständig getrocknete Polymerpartikel wurden mittels einer Walzenmühle mit einer Spaltbereite von weniger als 6 mm zerkleinert und mit einem Sieb mit einer Maschenweite von 10 mm gesiebt. Dabei wurden 21,4 kg Polymerpartikel mit einem Durchmesser von weniger als 10 mm und einem Wassergehalt von weniger als 1,5 Gew.-% erhalten, die ohne weitere Trocknung in das Verfahren zurückgeführt werden konnten.

13,7 kg abgetrenntes Grobkorn mit einem Partikeldurchmesser von über 10 mm wurde in einer Mühle mit scharfen Schlägern und einem Siebmiteiner Maschenweite von weniger als 25 mm als Mahlraumbegrenzung zerkleinert. Die Analyse des zerkleinerten Grobkorns ergab folgende Werte (Mehrfachbestimmung):

| Partikeldurchmesser | Menge | Wassergehalt |
|---|---|---|
| > 4 mm | 10,3 kg | 12-20 Gew.-% |
| 2 bis 4 mm | 0,7 kg | 8-10 Gew.-% |
| < 2 mm | 2,7 kg | 7-9 Gew.-% |

Das zerkleinerte Grobkorn wurde in den Bandtrockner zurückgeführt.

## Patentansprüche

1. Verfahren zur Herstellung wasserabsorbierender Polymerpartikel, umfassend die Schritte
i) Trocknung eines Hydrogels zur Herstellung eines getrockneten Hydrogels,
ii) Abtrennung unvollständig getrockneter Polymerpartikel aus dem getrockneten Hydrogel und
iii) Trocknung der abgetrennten unvollständig getrockneten Polymerpartikel,
**dadurch gekennzeichnet, dass** die abgetrennten unvollständig getrockneten Polymerpartikel vor der Trocknung iii) zerkleinert werden, die zerkleinerten unvollständig getrockneten Polymerpartikel vor der Trocknung iii) klassiert werden und nur das Grobkorn in die Trocknung iii) überführt wird.

2. Verfahren gemäß Anspruch 1, **dadurch gekennzeichnet, dass** bei der Trocknung i) soweit getrocknet wird, dass der Anteil der unvollständig getrockneten Polymerpartikel weniger als 50 Gew.-% des getrockneten Hydrogels beträgt.

3. Verfahren gemäß Anspruch 1 oder 2, **dadurch gekennzeichnet, dass** die Abtrennung ii) so durchgeführt wird, dass unvollständig getrocknete Polymerpartikel einen Durchmesser von mindestens 5 mm abgetrennt werden.

4. Verfahren gemäß einem der Ansprüche 1 bis 3, **dadurch gekennzeichnet, dass** bei der Trocknung i) soweit getrocknet wird, dass die unvollständig getrockneten Polymerpartikel einen Wassergehalt von mindestens 10 Gew.-% aufweisen.

5. Verfahren gemäß einem der Ansprüche 1 bis 4, **dadurch gekennzeichnet, dass** die unvollständig getrockneten Polymerpartikel mit einer Walzenmühle zerkleinert werden.

6. Verfahren gemäß einem der Ansprüche 1 bis 5, **dadurch gekennzeichnet, dass** abgetrennte Grobkorn vor der Trocknung iii) zerkleinert wird.

7. Verfahren gemäß Anspruch 6, **dadurch gekennzeichnet, dass** das abgetrennte Grobkorn mittels einer Mühle mit scharfen Schlägern oder Messern sowie einem Sieb als Mahlraumbegrenzung zerkleinert wird.

8. Verfahren gemäß Anspruch 6 oder 7, **dadurch gekennzeichnet, dass** zerkleinerte Grobkorn vor der Trocknung iii) klassiert wird, das Überkorn mit dem abgetrennten Grobkorn vereinigt, das Unterkorn mit dem getrockneten Hydrogel vereinigt und nur das Mittelkorn in die Trocknung iii) überführt wird.

9. Verfahren gemäß einem der Ansprüche 1 bis 8, **dadurch gekennzeichnet, dass** Trocknung i) und Trocknung iii) im selben Trockner durchgeführt werden.

10. Verfahren gemäß einem der Ansprüche 1 bis 8, **dadurch gekennzeichnet, dass** während der Trocknung iii) weiter zerkleinert wird.

11. Verfahren gemäß Anspruch 10, **dadurch gekennzeichnet, dass** mit einem Schaufeltrockner zerkleinert und getrocknet wird.

12. Verfahren gemäß einem der Ansprüche 1 bis 11, **dadurch gekennzeichnet, dass** die nach der Trocknung iii) erhaltenen zerkleinerten getrockneten Polymerpartikel weiter zerkleinert werden.

13. Verfahren gemäß Anspruch 12, **dadurch gekennzeichnet, dass** die zerkleinerten getrockneten Polymerpartikel mit einem Walzenstuhl weiter zerkleinert werden.

14. Verfahren gemäß einem der Ansprüche 1 bis 13, **dadurch gekennzeichnet, dass** die abgetrennten unvollständig getrockneten Polymerpartikel nach Zerkleinerung, Trocknung und gegebenenfalls weiterer Zerkleinerung in die Abtrennung ii) zurückgeführt werden.

15. Verfahren gemäß einem der Ansprüche 1 bis 14, **dadurch gekennzeichnet, dass** das wasserabsorbierende Polymer durch Lösungspolymerisation hergestellt wurde und die polymerisierte Monomerlösung Acrylsäure und mindestens einen mit Acrylsäure copolymerisierbaren Vernetzer enthält.

16. Verfahren gemäß Anspruch 15, **dadurch gekennzeichnet, dass** mindestens 50 mol-% der Monomere der Monomerlösung Acrylsäure und/oder deren Salze sind.

17. Verfahren gemäß einem der Ansprüche 1 bis 16, **dadurch gekennzeichnet, dass** die in der Abtrennung ii) nicht abgetrennten Polymerpartikel gemahlen und klassiert werden.

18. Verfahren gemäß Anspruch 17, **dadurch gekennzeichnet, dass** die klassierten Polymere nachvernetzt werden.

## Claims

1. A process for producing water-absorbing polymeric particles comprising the steps of
i) drying a hydrogel to produce a dried hydrogel,
ii) separating incompletely dried polymeric particles from the dried hydrogel, and
iii) drying the separated incompletely dried polymeric particles,
wherein the separated incompletely dried polymeric particles are comminuted before said drying iii), the comminuted incompletely dried polymeric particles are classified before said drying iii) and only coarse size is transferred into said drying iii) step.

2. The process according to claim 1 wherein said drying i) is carried on to such an extent that the fraction of incompletely dried polymeric particles amounts to less than 50% by weight of the dried hydrogel.

3. The process according to claim 1 or 2 wherein said separating ii) is carried out such that incompletely dried polymeric particles at least 5 mm in diameter are separated off.

4. The process according to any one of claims 1 to 3 wherein said drying i) is carried on to such an extent that the incompletely dried polymeric particles have a water content of at least 10% by weight.

5. The process according to any one of claims 1 to 4 wherein the incompletely dried polymeric particles are comminuted using a roll mill.

6. The process according to any one of claims 1 to 5 wherein separated coarse size is comminuted before said drying iii).

7. The process according to claim 6 wherein said separated coarse size is comminuted by means of a mill having sharp beaters or blades and also a sieve as grinding space bound.

8. The process according to claim 6 or 7 wherein comminuted coarse size is classified before said drying iii), oversize is combined with said separated coarse size, undersize is combined with the dried hydrogel and only midsize is transferred into said drying iii) step.

9. The process according to any one of claims 1 to 8 wherein said drying i) and said drying iii) are carried out in the same dryer.

10. The process according to any of claims 1 to 8 wherein further comminution is effected during said drying iii).

11. The process according to claim 10 wherein a shovel dryer is used for comminuting and drying.

12. The process according to any one of claims 1 to 11 wherein the comminuted dried polymeric particles obtained after said drying iii) are further comminuted.

13. The process according to claim 12 wherein the comminuted dried polymeric particles are further comminuted using a roll mill.

14. The process according to any one of claims 1 to 13 wherein the separated incompletely dried polymeric particles are after comminution, drying and, optionally, further comminution recycled into said separating ii) step.

15. The process according to any one of claims 1 to 14 wherein the water-absorbing polymer was formed by solution polymerization and the polymerized monomer solution comprises acrylic acid and at least one crosslinker copolymerizable with acrylic acid.

16. The process according to claim 15 wherein at least 50 mol% of the monomers of said monomer solution are acrylic acid and/or salts thereof.

17. The process according to any one of claims 1 to 16 wherein the polymeric particles not separated off in said separating ii) step are ground and classified.

18. The process according to claim 17 wherein the classified polymers are postcrosslinked.

## Revendications

1. Procédé pour la fabrication de particules polymères absorbant l'eau, comprenant les étapes
i) séchage d'un hydrogel pour la préparation d'un hydrogel séché,
ii) séparation de particules polymères à séchage incomplet de l'hydrogel séché et
iii) séchage des particules polymères à séchage incomplet séparées,
**caractérisé en ce que** les particules polymères à séchage incomplet séparées sont broyées avant le séchage iii), les particules polymères à séchage incomplet séparées broyées sont classées avant le séchage iii) et on ne transfère que les grosses particules dans le séchage iii).

2. Procédé selon la revendication 1, **caractérisé en ce que** lors du séchage i), on sèche jusqu'à ce que la proportion des particules polymères à séchage incomplet soit inférieure à 50% en poids de l'hydrogel séché.

3. Procédé selon la revendication 1 ou 2, **caractérisé en ce que** la séparation ii) est réalisée de manière telle que des particules polymères à séchage incomplet présentant un diamètre d'au moins 5 mm sont séparées.

4. Procédé selon l'une quelconque des revendications 1 à 3, **caractérisé en ce que** lors du séchage i), on sèche jusqu'à ce que les particules polymères à séchage incomplet présentent une teneur en eau d'au moins 10% en poids.

5. Procédé selon l'une quelconque des revendications 1 à 4, **caractérisé en ce que** les particules polymères à séchage incomplet sont broyées avec un broyeur à cylindres.

6. Procédé selon l'une quelconque des revendications 1 à 5, **caractérisé en ce que** des grosses particules séparées sont broyées avant le séchage iii).

7. Procédé selon la revendication 6, **caractérisé en ce que** les grosses particules séparées sont broyées au moyen d'un broyeur avec des déflecteurs coupants ou des couteaux ainsi qu'un tamis comme limitation de l'espace de broyage.

8. Procédé selon la revendication 6 ou 7, **caractérisé en ce que** des grosses particules broyées sont classées avant le séchage iii), les grains supérieurs sont rassemblés avec les grosses particules séparées, les grains inférieurs sont rassemblés avec l'hydrogel séché et seuls les grains moyens sont transférés dans le séchage iii).

9. Procédé selon l'une quelconque des revendications 1 à 8, **caractérisé en ce que** le séchage i) et le séchage iii) sont réalisés dans le même sécheur.

10. Procédé selon l'une quelconque des revendications 1 à 8, **caractérisé en ce qu'**un broyage ultérieur est réalisé pendant le séchage iii).

11. Procédé selon la revendication 10, **caractérisé en ce qu'**on broie et sèche avec un sécheur à pales.

12. Procédé selon l'une quelconque des revendications 1 à 11, **caractérisé en ce que** les particules polymères séchées broyées obtenues après le séchage iii) sont soumises à un broyage ultérieur.

13. Procédé selon la revendication 12, **caractérisé en ce que** les particules polymères séchées broyées sont soumises à un broyage ultérieur avec un broyeur à cylindres.

14. Procédé selon l'une quelconque des revendications 1 à 13, **caractérisé en ce que** les particules polymères à séchage incomplet séparées sont recyclées après broyage, séchage et le cas échéant broyage ultérieur dans la séparation ii).

15. Procédé selon l'une quelconque des revendications 1 à 14, **caractérisé en ce que** le polymère absorbant l'eau a été préparé par polymérisation en solution et la solution de monomères polymérisée contient de l'acide acrylique et au moins un réticulant copolymérisable avec de l'acide acrylique.

16. Procédé selon la revendication 15, **caractérisé en ce qu'**au moins 50% en mole des monomères de la solution de monomères sont de l'acide acrylique et/ou ses sels.

17. Procédé selon l'une quelconque des revendications 1 à 16, **caractérisé en ce que** les particules polymères non séparées dans la séparation ii) sont broyées et classées.

18. Procédé selon la revendication 17, **caractérisé en ce que** les polymères classés sont post-réticulés.
